# EUROPEAN PATENT SPECIFICATION

(11) **EP 3 167 678 B1**
(45) Date of publication and mention of the grant of the patent: **26.09.2018**
(21) Application number: 14747164.3
(22) Date of filing: 11.07.2014
(51) Int. Cl.: H04W 74/08, H04W 16/14

(54) **A COMMUNICATION DEVICE AND A METHOD THEREIN FOR TRANSMITTING DATA INFORMATION AT FIXED TIME INSTANTS IN A RADIO COMMUNICATIONS NETWORK**
KOMMUNIKATIONSVORRICHTUNG UND VERFAHREN DARIN ZUR ÜBERTRAGUNG VON DATENINFORMATIONEN ZU BESTIMMTEN ZEITPUNKTEN IN EINEM FUNKKOMMUNIKATIONSNETZWERK
DISPOSITIF DE COMMUNICATION ET PROCÉDÉ ASSOCIÉ POUR TRANSMETTRE DES INFORMATIONS DE DONNÉES À DES INSTANTS TEMPORELS FIXES DANS UN RÉSEAU DE COMMUNICATION RADIO

(43) Date of publication of application: 17.05.2017
(73) Proprietor: Telefonaktiebolaget LM Ericsson (publ), 164 83 Stockholm (SE)
(72) Inventor: FURUSKÄR, Anders, SE-113 44 Stockholm (SE); FALCONETTI, Laetitia, 177 61 Järfälla (SE); GODANA, Bruhtesfa, deceased (NO); KOUTSIMANIS, Chrysostomos, 112 19 Stockholm (SE); PARKVALL, Stefan, SE-167 57 Bromma (SE)
(74) Representative: Brann AB
(86) International application number: PCT/SE2014/050889
(87) International publication number: WO 2016/007058

(56) References cited:
- WO-A2-2010/101444
- US-A1- 2014 112 289
- US-B1- 7 403 539

## Description

### TECHNICAL FIELD

Embodiments herein relate to data transmissions in a radio communications network. In particular, embodiments herein relate to a communication device and a method therein for transmitting data information at fixed time instants in a radio communications network.

### BACKGROUND

In a typical radio communications network, wireless devices, also known as mobile stations, terminals, and/or User Equipments, UEs, communicate via a Radio Access Network, RAN, with one or more core networks. The RAN covers a geographical area which is divided into cell areas, with each cell area being served by a base station, e.g. a radio base station, RBS, or network node, which in some networks may also be called, for example, a "NodeB", "eNodeB" or "eNB". A cell is a geographical area where radio coverage is provided by the radio base station at a base station site or an antenna site in case the antenna and the radio base station are not collocated. Each cell is identified by an identity within the local radio area, which is broadcast in the cell. Another identity identifying the cell uniquely in the whole mobile network is also broadcasted in the cell. One radio base station may have one or more cells. The base stations communicate over the air interface operating on radio frequencies with the wireless devices within range of the base stations.

A Universal Mobile Telecommunications System, UMTS, is a third generation mobile communication system, which evolved from the second generation, 2G, Global System for Mobile Communications, GSM. The UMTS terrestrial radio access network, UTRAN, is essentially a RAN using wideband code division multiple access, WCDMA, and/or High Speed Packet Access, HSPA, for user equipments. In a forum known as the Third Generation Partnership Project, 3GPP, telecommunications suppliers propose and agree upon standards for third generation networks and UTRAN specifically, and investigate enhanced data rate and radio capacity. In some versions of the RAN as e.g. in UMTS, several base stations may be connected, e.g., by landlines or microwave, to a controller node, such as a radio network controller, RNC, or a base station controller, BSC, which supervises and coordinates various activities of the plural base stations connected thereto. The RNCs are typically connected to one or more core networks.

Specifications for the Evolved Packet System, EPS, have been completed within the 3^{rd} Generation Partnership Project, 3GPP, and this work continues in the coming 3GPP releases. The EPS comprises the Evolved Universal Terrestrial Radio Access Network, E-UTRAN, also known as the Long Term Evolution, LTE, radio access, and the Evolved Packet Core, EPC, also known as System Architecture Evolution, SAE, core network. E-UTRAN/LTE is a variant of a 3GPP radio access technology wherein the radio base station nodes are directly connected to the EPC core network rather than to RNCs. In general, in E-UTRAN/LTE the functions of a RNC are distributed between the radio base stations nodes, e.g. eNodeBs in LTE, and the core network. As such, the Radio Access Network, RAN, of an EPS has an essentially "flat" architecture comprising radio base station nodes without reporting to RNCs.

Carrier Sense Multiple Access, CSMA, is a well-known Media Access Control, MAC, protocol used primarily when having communication devices using shared transmission resources, such as, for example, communication devices operating in an unlicenced spectrum, e.g. Ethernet, WiFi, etc.

When using CSMA, a communication device that has data to transmit may first sense the radio channel, i.e. measure the antenna energy received for the radio channel. This is also commonly referred to as listen-before-talk. If the energy level of the radio channel is below a certain determined threshold, the radio channel is considered available or free, whereby the communication device may transmit its data. If the energy level of the radio channel is above the determined threshold, the radio channel is considered un-available or busy, whereby the communication device may not transmits its data. Instead, the communication device waits until the radio channel becomes available or free. The communication device may here generate a random back-off time. If the radio channel remains available or free for the duration of the generated random back-off time, the communication device may transmit its data. The generated back-off time is random in order for two or more communication devices that are backing off to not start transmitting their data at the same time.

CSMA is asynchronous with no fixed frame structure, which means that data transmissions from the communication devices are assumed to occur at any time. Since there are certain benefits with using CSMA, it may be advantageous to apply the same principles in other radio communications networks.

Some radio communications networks, such as, e.g. LTE, may however employ a scheduled, contention-free MAC protocol. Conventionally, in this case, a centrally located communication device, e.g. a radio base station, determines when data transmissions to or from different communication devices are to be performed. Thus, contrary to CSMA, such radio communications networks are synchronous and use a fixed frame structure, which means that data transmissions may only start at certain fixed time instants, such as, in the beginning of a subframe.

Since reception or transmission of data at arbitrary times is not supported by the communication devices in such radio communications networks, directly applying CSMA with random back-off times to such a radio communications networks for it to co-exist with other radio communications networks using CSMA with data transmissions starting at arbitrary times is not a viable solution.

US Publication 2014/112289 A1 describes transmitting a Physical Downlink Shared Channel, PDSCH, on an unlicensed band. Particularly, an evolved Node B, eNode B, performs carrier sensing and, after a prescribed back-off time, transmits a preamble and a reservation signal during a time interval before the PDSCH is transmitted. US Patent 7,403,539 B1 describes a control unit that detects a gain change over time and, if the gain change over time exceeds a first energy detection threshold, the control unit transitions to a new state and sets a channel busy signal to true depending on a channel busy signal (CCA) mode being implemented.

### SUMMARY

According to the present invention, a method as set forth in claim 1 and a device as set forth in claim 7 are provided. Embodiments of the invention are claimed in the dependent claims. It is an object of embodiments herein to improve data transmissions in a radio communications network.

According to a first aspect of embodiments herein, the object is achieved by a method performed by a first communication device for transmitting data information at fixed time instants on a radio channel to a second communication device in a radio communications network. First, the first communication device determines that the radio channel is available for transmitting data information to the second communication device, during a time period determined by the first communication device. Then, the first communication device transmits a preamble on the available radio channel following the determining performed during the first time period, wherein the preamble is transmitted up to a second time period before a next fixed time instant, and wherein the second time period is smaller than a period of time required by another communication device to begin transmission on the radio channel. The first communication device also transmits the data information on the available radio channel to the second communication device at the next fixed time instant following the transmission of the preamble.

According to a second aspect of embodiments herein, the object is achieved by a first communication device for transmitting data information at fixed time instants on a radio channel to a second communication device in a radio communications network. The first communication device comprises means adapted to determine that the radio channel is available for transmitting data information to the second communication device, during a time period determined by the first communication device. The first communication device also comprises means adapted to transmit a preamble on the available radio channel following the determining performed during the first time period, wherein the preamble is transmitted up to a second time period before a next fixed time instant, and wherein the second time period is smaller than a period of time required by another communication device to begin transmission on the radio channel. Furthermore, the first communication device comprises means adapted to transmit the data information on the available radio channel to the second communication device at the next fixed time instant following the transmission of the preamble.

According to a third aspect of embodiments herein, the object is achieved by a computer program, comprising instructions which, when executed on at least one processor, cause the at least one processor to carry out the method described above. According to a fourth aspect of embodiments herein, the object is achieved by a carrier containing the computer program described above, wherein the carrier is one of an electronic signal, optical signal, radio signal, or computer readable storage medium.

By having the first communication device transmitting a preamble when determining that the radio channel is available, the first communication device is able to reserve the radio channel for its data transmission and then at the next fixed time instant start transmitting its data. This means that during the transmission of the preamble other communication devices configured to transmit data at fixed time instants or at arbitrary time instances will perceive the radio channel as un-available or busy, thus preventing them from transmitting their data transmissions on the radio channel.

Hence, communication devices transmitting data information at fixed time instants are able to share the radio channel with communication device(s) transmitting data information at arbitrary time instants in an efficient way, thereby improve data transmissions in the radio communications network.

### BRIEF DESCRIPTION OF THE DRAWINGS

Embodiments will now be described in more detail in relation to the enclosed drawings.
Figure 1 is a schematic block diagram illustrating embodiments of communication devices in a radio communications network,
Figure 2 is a flowchart depicting embodiments of a method in a first communication device,
Figure 3 is schematic illustration of embodiments of a method in a first communication device,
Figure 4 is a schematic block diagram depicting embodiments of a first communication device.

### DETAILED DESCRIPTION

The figures are schematic and simplified for clarity, and they merely show details for the understanding of the embodiments presented herein, while other details have been left out.

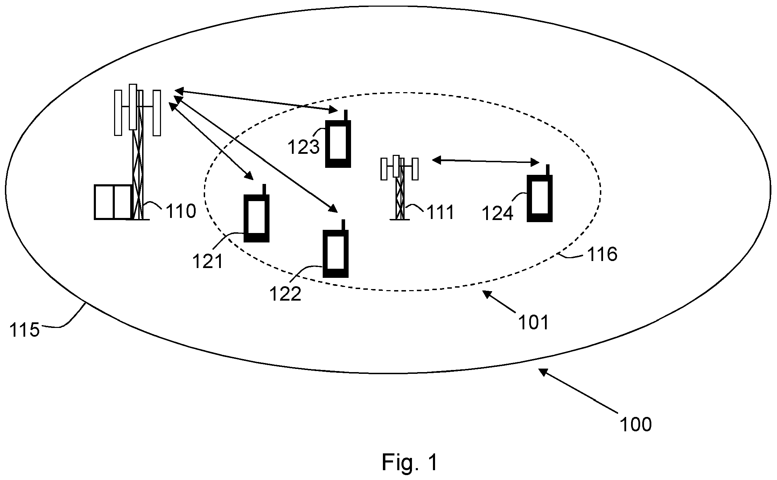

**Figure 1** shows an example of a first radio communications network 100 and a second radio communications network 101 in which embodiments herein may be implemented.

The **first radio communications network 100** may be any wireless communication system, such as, for example, a Long Term Evolution (LTE) or other 3GPP cellular network or system. The first radio communications network 100 comprises a network node 110. The **network node 110** may e.g. be an eNB, eNodeB, or a Home Node B, a Home eNode B, femto Base Station (BS), pico BS or any other network unit capable of serving a wireless device in the radio communications network 100. The network node 110 may also be e.g. a radio base station, a base station controller, a network controller, a relay node, a repeater, an access point, a radio access point, a Remote Radio Unit (RRU) or a Remote Radio Head (RRH). Furthermore, the network node 110 comprises one or more antennas for wireless radio communication with wireless devices located within their range; that is, the network node 110 may use one or more of its antennas to provide radio coverage within its **cell 115**. The network node 110 communicates over the air or radio interface operating on radio frequencies with the wireless devices within the cell 115 of the network node 110. A **first, second and third wireless device 121, 122, 123** are located within the cell 115. The first, second and third wireless device 121, 122, 123 are configured to communicate within the radio communications network 100 via the network node 110 over a radio link when present in the cell 115 served by the network node 110. The first, second and third wireless device 121, 122, 123 may e.g. be any kind of wireless device, such as, a mobile phone, a cellular phone, a Personal Digital Assistant (PDA), a smart phone, a tablet, a sensor equipped with a wireless device, Laptop-Mounted Equipment (LME) (e.g. USB), Laptop-Embedded Equipment (LEE), Machine-Type-Communication (MTC) device, a wireless device with D2D capability, Customer Premises Equipment (CPE), etc.

The first radio communications network 100 is synchronous and uses a fixed frame structure, which means that data transmissions may only start at certain fixed time instants, such as, in the beginning of a subframe. In the first radio communications network 100, the network node 110 determines when data transmissions to or from the first, second and third wireless devices 121, 122, 123 are to be performed. Thus, the first radio communications network 100 may employ a scheduled, contention-free MAC protocol.

Furthermore, the **second radio communications network 101** may be any wireless communication system sharing its frequency spectrum with other radio communications networks. This may, for example, be a radio communication network operating in an unlicensed frequency spectrum. In this example, the second radio communications network 101 is a WiFi network.

The second radio communications network 101 comprises a network node 111. The **network node 111** may here be any wireless communications access point capable of providing access to a local network using the shared or unlicensed frequency spectrum, such as, for example, a WiFi access point. A **fourth wireless device 124** is located within the coverage range of the network node 111, as indicated in Figure 1 by the area 116. The fourth wireless device 124 is configured to communicate within the network node 111, over e.g. a WiFi link, when within coverage range of the network node 111.

Thus, in this example, the second radio communications network 101 is asynchronous and uses no fixed frame structure. This means that data transmissions may occur or start at any time. Thus, in the second radio communications network 101, a MAC-protocol using CSMA, as described above in the background, may be used in order to share the radio transmission resources between wireless devices.

Conventionally, since the first and second radio communications networks 100, 101 often operate in different frequency spectrums, such as, e.g. in a licensed and an unlicensed spectrum, there is no conflict between the two radio communications networks.

However, it has been noted that in some cases, it may be of interest for radio communications networks, such as, e.g. the first radio communications network 100, to also be able to operate in frequency spectrum bands where other radio communications networks also operate, such as, e.g. the second radio communications network 101. This means that the first and second radio communications networks 100 must be able to co-exist and share the radio transmission resources in an efficient manner.

As described above in the background, applying CSMA with random back-off times in the first radio communications network 100 such as performed in the second radio communication network 101 is not a viable solution. This is because data transmissions may occur at any arbitrary time in the second communications network 101, while data transmission in the first radio communications network only may occur at certain fixed time instants, e.g. at the beginning of a subframe. Hence, access to the radio channel will not be on equal terms for the first and second radio communications networks 100, 101.

In accordance with embodiments described herein, this issue is addressed by having a communication device in the first radio communications network 100 transmitting a preamble when determining that the radio channel is available. Thus, the communication device is able to reserve the radio channel for its data transmission and then at the next fixed time instant, e.g. the next upcoming subframe in the first radio communications network 100, start transmitting its data. This means that during the transmission of the preamble other communication devices will perceive the radio channel as un-available or busy, thus preventing them from transmitting their data transmissions on the radio channel. This is true for both communication devices configured to transmit data at fixed time instants, such as, e.g. the first, second and third wireless devices 121 or network node 110, and communication devices configured to transmit data at arbitrary time instances, such as, e.g. the fourth wireless device 124 or network node 111. Hence, communication devices transmitting data information at fixed time instants are able to share the radio channel with communication device(s) transmitting data information at arbitrary time instants in an efficient way.

It should also be noted that this also works well when the second radio communications network 101, for example, also is an LTE network or other 3GPP cellular network or system that wants to operate in frequency spectrum bands where other radio communications are operating.

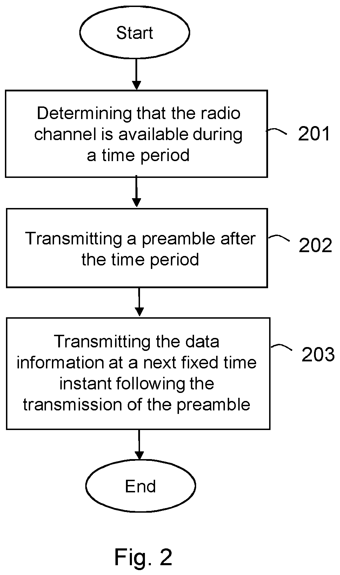

In the embodiments described below with reference to Figure 2, the term first communication device is used to denote any communication device configured to transmit data at fixed time instants on a radio channel in the radio communications network 100, such as, for example, the network node 110 or any of the first, second or third wireless devices 121, 122, 123 in the first radio communications network 100. Also, in the embodiments described below with reference to Figure 2, the term second communication device is used to denote any communication device configured to receive data at fixed time instants on a radio channel in the first radio communications network 100, such as, for example, the network node 110 or any of the first, second or third wireless devices 121, 122, 123 in the first radio communications network 100.

Thus, according to some embodiments, the first communication device may be the network node 110 and the second communication device may be any of the wireless device 121, 122, 123, or vice versa.

Example of embodiments of a method performed by a first communication device 110, 121, 122, 123 for transmitting data information at fixed time instants on a radio channel to a second communication device 121, 122, 123, 110 in a radio communications network 100, will now be described with reference to the flowchart depicted in Figure 2. **Figure 2** illustrates an example of actions or operations which may be taken by the first communication device 110, 121, 122, 123, when the first communication device 110, 121, 122, 123 has data to transmit to the second communication device 121, 122, 123, 110.

### Action 201

First, the first communication device 110, 121, 122, 123 determines that the radio channel is available for transmitting data information to the second communication device 121, 122, 123, 110 during a time period determined by the first communication device 110, 121, 122, 123. In some embodiments, determining that the radio channel is available is performed by determining that the energy level of transmissions on the radio channel is below a threshold value for the duration of the time period.

In some embodiments, the time period determined by the first communication device 110, 121, 122, 123 is a randomly generated time period. This may also be referred to as a random back-off time. According to one example, the time period may comprise a first and a second time period, wherein the first time period is a determined minimum time period for determining whether the radio channel is available and the second time period is a random time period.

### Action 202

Following the determination in Action 201, the first communication device 110, 121, 122, 123 transmits a preamble on the available radio channel after the time period. Here, the transmission of the preamble may be performed up until the next fixed time instant. This may comprise transmitting the preamble up until a time period before the next fixed time instant which time period is sufficiently short in duration to not allow another communication device to begin data transmission on the radio channel, i.e. without leaving the radio channel free or available to other communication devices.

Advantageously, this will reserve the radio channel for the first communication device 110, 121, 122, 123, since the transmission of the preamble will cause other communication devices to perceive the radio channel as un-available or busy.

In this way, deterministic collisions in the radio communications network 100 will be avoided. This is shown by the fact that if the first communication device 110, 121, 122, 123 simply where to wait with the data transmission until the beginning of the next time instant, i.e. without transmitting a preamble, the radio channel may become occupied by another communication device configured to transmit its data transmissions at arbitrary time instants. Alternatively, another communication device configured to transmit its data transmissions at fixed time instants may in this case consider the radio channel available and also begin transmitting its data transmission on the radio channel at the next fixed time instant, e.g. at the beginning of the next subframe.

In some embodiments, the preamble may be transmitted across the complete bandwidth of the available radio channel. Alternatively, in some embodiments, the preamble may be transmitted over a determined bandwidth of the available radio channel for which the second communication device 121, 122, 123, 110 has been scheduled for transmitting the data information. This may, for example, be advantageous when having more than one communication device scheduled in the same subframe, but using nonoverlapping parts of the bandwidth. This is because the more than one communication devices in this case will not interfere with each other, since they are scheduled in different parts of the frequency spectrum. In some embodiments, the preamble may comprise information associated with the transmission of the data information. This means that the preamble transmitted on the available radio channel may be used to indicate information other than the data to be transmitted to one or more other communication devices, e.g. the second communication device 121, 122, 123, 110. For example, the information may be used to indicate to one or more other communication devices the duration of the upcoming data transmission in Action 203.

According to some embodiments, the information may indicate the bandwidth of the available radio channel that the first communication device 110, 121, 122, 123 uses when transmitting the data information. This means, for example, that the information may be used to indicate to one or more other communication devices the different subcarriers that are used. The different subcarriers may here, for example, be based on the average load in the cell 115.

### Action 203

In this action, the first communication device 110, 121, 122, 123 transmits the data information on the available radio channel to the second communication device 121, 122, 123, 110 at a next fixed time instant following the transmission of the preamble. This means that the actual data transmission will not occur during the time period of the transmission of the preamble, but be performed upon the next upcoming fixed time instant set by the radio communications network 110. This advantageously enables the data transmission to occur at a time expected by the second communication device 121, 122, 123, 110, i.e. the data transmission will begin at the next fixed time instant following the transmission of the preamble in Action 202.

In some embodiments, a fixed time instant is the start of a subframe. This means that the data transmission will begin at the start of the next upcoming subframe. This applies when the radio communications network 100 is arranged with a fixed frame configuration, i.e. being synchronous and using a fixed frame structure, whereby data transmissions may only start at the beginning of a subframe. One example is when the radio communications network 100 is an LTE network.

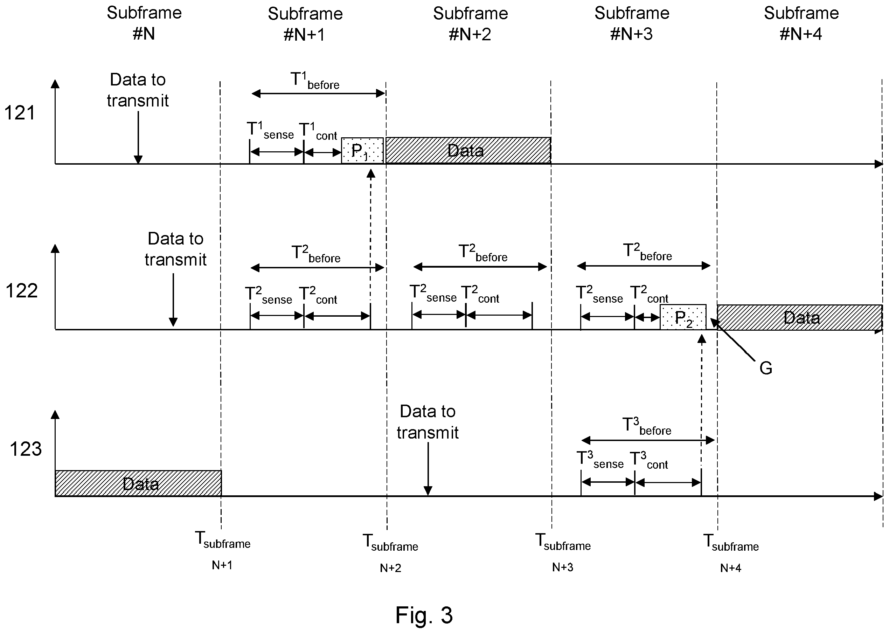

**Figure 3** is schematic illustration of example scenario depicting embodiments of a method in a first communication device. In this example scenario, the first communication device may be any one of the wireless devices 121, 122, 123.

In the example scenario of Figure 3, the first wireless device 121 and the second wireless device 122 both determine that they have data information to transmit in the subframe #N. Also, in the subframe #N, the third wireless device 123 is transmitting data on the radio channel, as indicated by the dashed area in Figure 3 for the third wireless device 123. This leaves the radio channel un-available or busy for data transmission by the first and second wireless device 121, 122. However, the data transmission of the third wireless device 123 ends at the end of the subframe #N.

The first wireless device 121 waits until the end of the subframe #N, i.e. start of the subframe #N+1, before starting to sense the radio channel, i.e. determining if the radio channel is available for the first wireless device 121 to transmit its data information. As shown in Figure 3, the first wireless device 121 may in subframe #N+1 also wait a suitable time period, T¹_{before}, before the start of the next subframe, T_{subframe N+2}, before starting to sense the radio channel. The first wireless device 121 may sense the radio channel for a random period of time, T¹ₛₑₙₛₑ + T¹_{cont}. Here, T¹ₛₑₙₛₑ is a fixed minimum sensing time for sensing the radio channel, and T¹_{cont} is a random time period between 0-Tₘₐₓ generated by the first wireless device 121. Tₘₐₓ is here a determined maximum random time period.

In this case, the first wireless device 121 will determine that the radio channel is available or free, since the first wireless device 121 has not detected a received energy level above a determined threshold for the radio channel for the random time period, T¹ₛₑₙₛₑ + T¹_{cont}, in the subframe #N+1. The first wireless device 121 thus begins to transmit the preamble, P₁, on the radio channel.

In a similar manner, the second wireless device 122 also waits until the end of the subframe #N, i.e. start of the subframe #N+1, before starting to sense the radio channel. As shown in Figure 3, the second wireless device 121 may in subframe #N+1 also wait a suitable time period, T²_{before}, before the start of the next subframe, T_{subframe N+2}, before starting to sense the radio channel. The second wireless device 122 may sense the radio channel for a random period of time, T²ₛₑₙₛₑ + T²_{cont}. Here, the T²ₛₑₙₛₑ may be the same fixed minimum sensing time as for the first wireless device 121, T¹ₛₑₙₛₑ. T²_{cont} is a random time period between 0-Tₘₐₓ generated by the second wireless device 122 and is thus different from the random time period, T¹_{cont}, generated by the first wireless device 121.

Furthermore, the second wireless device 122 will determine that the radio channel is un-available or busy, since the second wireless device 122 will detect a received energy level that is above a determined threshold for the radio channel for the random time period, T¹ₛₑₙₛₑ + T¹_{cont}. This is because the first wireless device 121 is transmitting its preamble, P₁, on the radio channel.

At the beginning of the next subframe, T_{subframe N+2}, the first wireless device 121 will start to transmit its data information in the subframe #N+2, as indicated by the dashed area in Figure 3 for the first wireless device 121.

Since the second wireless device 122 still has data information to transmit, the second wireless device 122 will sense the radio channel in subframe #N+2 and determine that the radio channel is un-available or busy since the first wireless device 121 is transmitting its data information on the radio channel. According to the example scenario of Figure 3, the third wireless device 123 may in subframe #N+2 further determine that it also has data information to transmit. In the next subframe #N+3, the data transmission of the first wireless device 121 has ended.

Both the second and third wireless device 122, 123 will start to sense the radio channel in subframe #N+3. Note that the random time period, T²_{cont}, generated by the second wireless device 122 in subframe #N+2 and/or #N+3 may be different than the random time period, T²_{cont}, generated by the second wireless device 122 in subframe #N+1. The third wireless device 123 may sense the radio channel for a random period of time, T³ₛₑₙₛₑ + T³_{cont}. Here, the T³ₛₑₙₛₑ may be the same fixed minimum sensing time as for the first and second wireless device 121, e.g. T¹ₛₑₙₛₑ. T³_{cont} is however a random time period between 0-Tₘₐₓ generated by the third wireless device 123 and is thus different from the random time period, T²_{cont}, generated by the second wireless device 122.

In this case, the second wireless device 122 will determine that the radio channel is available or free, since the second wireless device 122 has not detected a received energy level above a determined threshold for the radio channel for the random time period, T²ₛₑₙₛₑ + T²_{cont}, in the subframe #N+3. The second wireless device 122 thus begins to transmit the preamble, P₂, on the radio channel.

Furthermore, because the second wireless device 122 is transmitting its preamble, P₂, on the radio channel, the third wireless device 123 will detect a received energy level that is above a determined threshold for the radio channel for the random time period, T¹ₛₑₙₛₑ + T¹_{cont}. Thus, the third wireless device 123 will determine that the radio channel is un-available or busy in the subframe #N+3.

At the beginning of the next subframe, T_{subframe N+4}, the second wireless device 122 will start to transmit its data information in the subframe #N+4, as indicated by the dashed area in Figure 3 for the second wireless device 122.

It should be noted that the transmission of the preamble may be performed up until the next subframe. This may also comprise transmitting the preamble up until a time period, G, before the next subframe #N+4. In this case, it is important that the time period, G, is sufficiently short in duration to not allow another communication device to begin to transmit data on the radio channel, that is, without leaving the radio channel free or available to other communication devices.

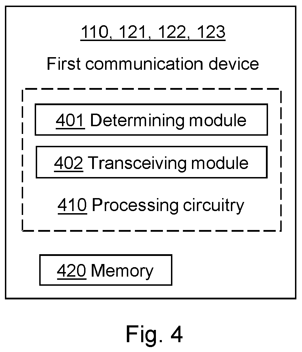

To perform the method actions in the first communication device 110, 121, 122, 123 for transmitting data information at fixed time instants on a radio channel to a second communication device 121, 122, 123, 110 in a radio communications network 100, the first communication device 110, 121, 122, 123 may comprise the following arrangement depicted in Figure 4. **Figure 4** shows a schematic block diagram of embodiments of the first communication device 110, 121, 122, 123.

In some embodiments, the first communication device 110, 121, 122, 123 may comprise a **determining module 401** and a **transceiving module 402**. In some embodiments, the first communication device 110, 121, 122, 123 may comprise a **processing circuitry 410**, which may also be referred to as processing module, processing unit or processor. The processing circuitry 410 may comprise one or more of the determining module 401 and the transceiving module 402, and/or itself perform the function thereof, as described below.

The first communication device 110, 121, 122, 123 is configured to, e.g. by means of the determining module 401, determine that the radio channel is available for transmitting data information to the second communication device 121, 122, 123, 110 during a time period determined by the first communication device 110, 121, 122, 123. Also, the first communication device 110, 121, 122, 123 is configured to, e.g. by means of the transceiving module 402, transmit a preamble on the available radio channel after the time period. Furthermore, the first communication device 110, 121, 122, 123 is configured to, e.g. by means of the transceiving module 402, transmit the data information on the available radio channel to the second communication device 121, 122, 123, 110 at a next fixed time instant following the transmission of the preamble.

In some embodiments, the first communication device 110, 121, 122, 123/transceiving module 402 may be configured to transmit the preamble across the complete bandwidth of the available radio channel. Alternatively, according to some embodiments, the first communication device 110, 121, 122, 123/transceiving module 402 may be configured to transmit the preamble over a determined bandwidth of the available radio channel for which the second communication device 121, 122, 123, 110 has been scheduled for transmitting the data information.

Also, in some embodiments, the preamble may comprise information associated with the transmission of the data information. In this case, the information may, for example, indicate the bandwidth of the available radio channel that the first communication device 110, 121, 122, 123 uses when transmitting the data information.

In some embodiments, the time period determined by the first communication device 110, 121, 122, 123 is a randomly generated time period.

Furthermore, in some embodiments, the first communication device 110, 121, 122, 123/ determining module 401 may be configured to determine that the radio channel is available by determining that the energy level of transmissions on the radio channel is below a threshold value for the duration of the time period. In some embodiments, the fixed time instant is the start of a subframe.

It should also be noted that the first communication device may be a network node 110 or a wireless device 121, 122, 123.

The embodiments for transmitting data information at fixed time instants on a radio channel may be implemented through one or more processors, such as, e.g. the processing circuitry 410 in the first communication device 110, 121, 122, 123 depicted in Figure 4, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 410 in the first communication device 110, 121, 122, 123. The computer program code may e.g. be provided as pure program code in the first communication device 110, 121, 122, 123 or on a server and downloaded to the first communication device 110, 121, 122, 123. The carrier may be one of an electronic signal, optical signal, radio signal, or computer readable storage medium, such as, e.g. electronic memories like a RAM, a ROM, a Flash memory, a magnetic tape, a CD-ROM, a DVD, a Blueray disc, etc.

The first communication device 110, 121, 122, 123 may further comprise a **memory 420**, which may be referred to or comprise one or more memory modules or units. The memory 420 may be arranged to be used to store executable instructions and data to perform the methods described herein when being executed in the first communication device 110, 121, 122, 123. Those skilled in the art will also appreciate that the processing circuitry 410 and the memory 420 described above may refer to a combination of analog and digital circuits, and/or one or more processors configured with software and/or firmware, e.g. stored in the memory 420, that when executed by the one or more processors such as the processing circuitry 410 perform the method as described above. The processing circuitry 410 and the memory 420 may also be referred to as processing means. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

From the above it may be seen that some embodiments may comprise a computer program product, comprising instructions which, when executed on at least one processor, e.g. the processing circuitry 410 or modules 401-402, cause the at least one processor to carry out the method for transmitting data information at fixed time instants on a radio channel to a second communication device 121, 122, 123, 110 in a radio communications network 100. Also, some embodiments may, as described above, further comprise a carrier containing said computer program, wherein the carrier is one of an electronic signal, optical signal, radio signal, or computer readable storage medium.

The terminology used in the detailed description of the particular embodiments illustrated in the accompanying drawings is not intended to be limiting of the described method or the communication device, which instead should be construed in view of the enclosed claims.

As used herein, the term "and/or" comprises any and all combinations of one or more of the associated listed items.

Further, as used herein, the common abbreviation "e.g.", which derives from the Latin phrase "exempli gratia," may be used to introduce or specify a general example or examples of a previously mentioned item, and is not intended to be limiting of such item. If used herein, the common abbreviation "i.e.", which derives from the Latin phrase "id est," may be used to specify a particular item from a more general recitation. The common abbreviation "etc.", which derives from the Latin expression "et cetera" meaning "and other things" or "and so on" may have been used herein to indicate that further features, similar to the ones that have just been enumerated, exist.

As used herein, the singular forms "a", "an" and "the" are intended to comprise also the plural forms as well, unless expressly stated otherwise. It will be further understood that the terms "includes," "comprises," "including" and/or "comprising," when used in this specification, specify the presence of stated features, actions, integers, steps, operations, elements, and/or components, but do not preclude the presence or addition of one or more other features, actions, integers, steps, operations, elements, components, and/or groups thereof.

Unless otherwise defined, all terms comprising technical and scientific terms used herein have the same meaning as commonly understood by one of ordinary skill in the art to which the described embodiments belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The embodiments herein are not limited to the above described preferred embodiments. Various alternatives, modifications and equivalents may be used. Therefore, the above embodiments should not be construed as limiting.

## Claims

1. A method performed by a first communication device (110; 121; 122; 123) for transmitting data information at fixed time instants on a radio channel to a second communication device (121; 122; 123; 110) in a radio communications network (100), the method comprising
determining (201) that the radio channel is available for transmitting data information to the second communication device (121; 122; 123; 110), during a first time period determined by the first communication device (110; 121; 122; 123);
transmitting (202) a preamble on the available radio channel following the determining (201) performed during the first time period, wherein the preamble is transmitted (202) up to a second time period before a next fixed time instant, and wherein the second time period is smaller than a period of time required by another communication device to begin transmission on the radio channel; and
transmitting (203) the data information on the available radio channel to the second communication device (121; 122; 123; 110) at the next fixed time instant following the transmission of the preamble.

2. The method according to claim 1, wherein the preamble is transmitted across the complete bandwidth of the available radio channel.

3. The method according to claim 1, wherein the preamble is transmitted over a determined bandwidth of the available radio channel for which the second communication device (121; 122; 123; 110) has been scheduled for transmitting the data information.

4. The method according to any of claims 1-3, wherein the preamble comprise information associated with the transmission of the data information, and wherein the information associated with the transmission of the data information indicates the bandwidth of the available radio channel that the first communication device (110; 121; 122; 123) uses when transmitting the data information.

5. The method according to any of claims 1-4, wherein the first time period determined by the first communication device (110; 121; 122; 123) is a randomly generated time period.

6. The method according to any of claims 1-5, wherein the determining (201) is performed by determining that the energy level of transmissions on the radio channel is below a threshold value for the duration of the first time period, and wherein a fixed time instant is the start of a subframe.

7. A first communication device (110; 121; 122; 123) for transmitting data information at fixed time instants on a radio channel to a second communication device (121; 122; 123; 110) in a radio communications network (100), the first communication device (121; 122; 123; 110) comprising: means adapted to determine (201) that the radio channel is available for transmitting data information to the second communication device (121; 122; 123; 110), during a first time period determined by the first communication device (110; 121; 122; 123), means adapted to transmit (202) a preamble on the available radio channel following the determining (201) performed during the first time period, wherein the preamble is transmitted (202) up to a second time period before a next fixed time instant, and wherein the second time period is smaller than a period of time required by another communication device to begin transmission on the radio channel, and means adapted to transmit (203) the data information on the available radio channel to the second communication device (121; 122; 123; 110) at the next fixed time instant following the transmission of the preamble.

8. The first communication device (110; 121; 122; 123) according to claim 7, wherein the preamble is transmitted across the complete bandwidth of the available radio channel.

9. The first communication device (110; 121; 122; 123) according to claim 7, wherein the preamble is transmitted over a determined bandwidth of the available radio channel for which the second communication device (121; 122; 123; 110) has been scheduled for transmitting the data information.

10. The first communication device (110; 121; 122; 123) according to any of claims 7-9, wherein the preamble comprise information associated with the transmission of the data information.

11. The first communication device (110; 121; 122; 123) according to any of claims 7-10, wherein the information associated with the transmission of the data information indicates the bandwidth of the available radio channel that the first communication device (110; 121; 122; 123) uses when transmitting the data information.

12. The first communication device (110; 121; 122; 123) according to any of claims 7-11, wherein the first time period determined by the first communication device (110; 121; 122; 123) is a randomly generated time period.

13. The first communication device (110; 121; 122; 123) according to any of claims 7-12, further configured to determine (201) that the radio channel is available by determining that the energy level of transmissions on the radio channel is below a threshold value for the duration of the first time period.

14. The first communication device (110; 121; 122; 123) according to any of claims 7-13, wherein a fixed time instant is the start of a subframe.

15. The first communication device (110; 121; 122; 123) according to any of claims 7-14, wherein the first communication device is either a network node (110) in the radio communications network (100) or a wireless device (121; 122; 123).

## Patentansprüche

1. Verfahren, das durch eine erste Kommunikationsvorrichtung (110; 121; 122; 123) zum Übertragen von Dateninformationen zu bestimmten Zeitpunkten auf einem Funkkanal an eine zweite Kommunikationsvorrichtung (121; 122; 123; 110) in einem Funkkommunikationsnetzwerk (100) durchgeführt wird, wobei das Verfahren Folgendes umfasst
Bestimmen (201), dass der Funkkanal zum Übertragen von Dateninformationen an die zweite Kommunikationsvorrichtung (121; 122; 123; 110) verfügbar ist, während eines ersten Zeitraums, der durch die erste Kommunikationsvorrichtung (110; 121; 122; 123) bestimmt ist;
Übertragen (202) einer Präambel auf dem verfügbaren Funkkanal nach dem Bestimmen (201), das während des ersten Zeitraums durchgeführt wird, wobei die Präambel zu einem zweiten Zeitraum vor einem nächsten bestimmten Zeitpunkt nach oben übertragen (202) wird, und wobei der zweite Zeitraum kleiner ist als ein Zeitraum, der durch eine andere Kommunikationsvorrichtung erforderlich ist, um die Übertragung auf dem Funkkanal zu beginnen; und
Übertragen (203) der Dateninformationen auf dem verfügbaren Funkkanal an die zweite Kommunikationsvorrichtung (121; 122; 123; 110) an dem nächsten bestimmten Zeitpunkt nach der Übertragung der Präambel.

2. Verfahren nach Anspruch 1, wobei die Präambel über die gesamte Bandbreite des verfügbaren Funkkanals übertragen ist.

3. Verfahren nach Anspruch 1, wobei die Präambel über eine bestimme Bandbreite des verfügbaren Funkkanals übertragen wird, für den die zweite Kommunikationsvorrichtung (121; 122; 123; 110) zum Übertragen der Dateninformationen eingeplant wurde.

4. Verfahren nach einem der Ansprüche 1-3, wobei die Präambel Informationen umfasst, die mit der Übertragung der Dateninformationen zusammenhängen, und wobei die Informationen, die mit der Übertragung der Dateninformationen zusammenhängen, die Bandbreite des verfügbaren Funkkanals angeben, den die erste Kommunikationsvorrichtung (110; 121; 122; 123) verwendet, wenn sie die Dateninformationen überträgt.

5. Verfahren nach einem der Ansprüche 1-4, wobei der erste Zeitraum, der durch die erste Kommunikationsvorrichtung (110; 121; 122; 123) bestimmt ist, ein zufällig generierter Zeitraum ist.

6. Verfahren nach einem der Ansprüche 1-5, wobei das Bestimmen (201) durch Bestimmen, dass der Energiepegel von Übertragungen auf dem Funkkanal unter einem Schwellenwert für die Dauer des ersten Zeitraums liegt, durchgeführt wird, und wobei ein bestimmter Zeitpunkt der Start eines Subframes ist.

7. Erste Kommunikationsvorrichtung (110; 121; 122; 123) zum Übertragen von Dateninformationen zu bestimmten Zeitpunkten auf einem Funkkanal an eine zweite Kommunikationsvorrichtung (121; 122; 123; 110) in einem Funknetzwerk (100), wobei die erste Kommunikationsvorrichtung (121; 122; 123; 110) Folgendes umfasst:
Mittel, die zu Folgendem angepasst sind Bestimmen (201), dass der Funkkanal zum Übertragen von Dateninformationen an die zweite Kommunikationsvorrichtung (121; 122; 123; 110) verfügbar ist, während eines ersten Zeitraums, der durch die erste Kommunikationsvorrichtung (110;121; 122; 123) bestimmt ist,
Mittel, die zu Folgendem angepasst sind Übertragen (202) einer Präambel auf dem verfügbaren Funkkanal nach dem Bestimmen (201), das während des ersten Zeitraums durchgeführt wurde, wobei die Präambel zu einem zweiten Zeitraum vor einem nächsten bestimmten Zeitpunkt nach oben übertragen (202) wird, und wobei der zweite Zeitraum kleiner ist als ein Zeitraum, der durch eine andere Kommunikationsvorrichtung benötigt wird, um mit der Übertragung auf dem Funkkanal zu beginnen, und
Mittel, die zu Folgendem angepasst sind Übertragen (203) der Dateninformationen auf dem verfügbaren Funkkanal an die zweite Kommunikationsvorrichtung (121; 122; 123; 110) an dem nächsten bestimmten Zeitpunkt nach der Übertragung der Präambel.

8. Erste Kommunikationsvorrichtung (110; 121; 122; 123) nach Anspruch 7, wobei die Präambel über die gesamte Bandbreite des verfügbaren Radiokanals übertragen wird.

9. Erste Kommunikationsvorrichtung (110; 121; 122; 123) nach Anspruch 7, wobei die Präambel über eine bestimmte Bandbreite des verfügbaren Funkkanals übertragen ist, für den die zweite Kommunikationsvorrichtung (121; 122; 123; 110) zum Übertragen der Dateninformationen eingeplant ist.

10. Erste Kommunikationsvorrichtung (110; 121; 122; 123) nach einem der Ansprüche 7-9, wobei die Präambel Informationen umfasst, die mit der Übertragung der Dateninformationen zusammenhängen.

11. Erste Kommunikationsvorrichtung (110; 121; 122; 123) nach einem der Ansprüche 7-10, wobei die Informationen, die mit der Übertragung der Dateninformationen zusammenhängen, die Bandbreite des verfügbaren Funkkanals angeben, den die erste Kommunikationsvorrichtung (110; 121; 122; 123) verwendet, wenn sie die Dateninformationen überträgt.

12. Erste Kommunikationsvorrichtung (110; 121; 122; 123) nach einem der Ansprüche 7-11, wobei der erste Zeitraum, der durch die erste Kommunikationsvorrichtung (110; 121; 122; 123) bestimmt ist, ein zufällig erzeugter Zeitraum ist.

13. Erste Kommunikationsvorrichtung (110; 121; 122; 123) nach einem der Ansprüche 7-12, die ferner dazu konfiguriert ist zu bestimmen (201), dass der Funkkanal verfügbar ist, durch Bestimmen, dass der Energiepegel der Übertragungen auf dem Funkkanal unter einem Schwellenwert für die Dauer des ersten Zeitraums liegt.

14. Erste Kommunikationsvorrichtung (110; 121; 122; 123) nach einem der Ansprüche 7-13, wobei ein bestimmter Zeitpunkt der Start eines Subframes ist.

15. Erste Kommunikationsvorrichtung (110; 121; 122; 123) nach einem der Ansprüche 7-14, wobei die erste Kommunikationsvorrichtung entweder ein Netzwerkknoten (110) in dem Funkkommunikationsnetzwerk (100) oder eine drahtlose Vorrichtung (121; 122; 123) ist.

## Revendications

1. Procédé effectué par un premier dispositif de communication (110 ; 121 ; 122 ; 123) pour transmettre des informations de données à des instants temporels fixes sur un canal radio à un second dispositif de communication (121 ; 122 ; 123 ; 110) dans un réseau de communications radio (100), le procédé comprenant
la détermination (201) que le canal radio est disponible pour transmettre des informations de données au second dispositif de communication (121 ; 122 ; 123 ; 110), pendant une première période de temps déterminée par le premier dispositif de communication (110 ; 121 ; 122, 123) ;
la transmission (202) d'un préambule sur le canal radio disponible suivant la détermination (201) effectuée pendant la première période de temps, où le préambule est transmis (202) jusqu'à une seconde période de temps avant un prochain instant temporel fixe, et où la seconde période de temps est plus petite qu'une période de temps requise par un autre dispositif de communication pour commencer une transmission sur le canal radio ; et
la transmission (203) des informations de données sur le canal radio disponible au second dispositif de communication (121 ; 122 ; 123 ; 110) au prochain instant temporel fixe suivant la transmission du préambule.

2. Procédé selon la revendication 1, dans lequel le préambule à travers la largeur de bande complète du canal radio disponible.

3. Procédé selon la revendication 1, dans lequel le préambule est transmis sur une largeur de bande déterminée du canal radio disponible pour lequel le second dispositif de communication (121 ; 122 ; 123 ; 110) a été ordonnancé pour transmettre les informations de données.

4. Procédé selon l'une quelconque des revendications 1 à 3, dans lequel le préambule comprend des informations associées à la transmission des informations de données, et dans lequel les informations associées à la transmission des informations de données indiquent la largeur de bande du canal radio disponible que le premier dispositif de communication (110 ; 121 ; 122 ; 123) utilise lors de la transmission des informations de données.

5. Procédé selon l'une quelconque des revendications 1 à 4, dans lequel la première période de temps déterminée par le premier dispositif de communication (110 ; 121 ; 122 ; 123) est une période de temps générée aléatoirement.

6. Procédé selon l'une quelconque des revendications 1 à 5, dans lequel la détermination (201) est effectuée en déterminant que le niveau d'énergie de transmissions sur le canal radio est inférieur à une valeur de seuil pendant la durée de la première période de temps, et dans lequel un instant temporel fixe est le début d'une sous-trame.

7. Premier dispositif de communication (110 ; 121 ; 122 ; 123) pour transmettre des informations de données à des instants temporels fixes sur un canal radio à un second dispositif de communication (121 ; 122 ; 123 ; 110) dans un réseau de communications radio (100), le premier dispositif de communication (121 ; 122 ; 123 ; 110) comprenant :
des moyens adaptés pour déterminer (201) que le canal radio est disponible pour transmettre des informations de données au second dispositif de communication (121 ; 122 ; 123 ; 110), pendant une première période de temps déterminée par le premier dispositif de communication (110 ; 121 ; 122, 123) ;
des moyens adaptés pour transmettre (202) un préambule sur le canal radio disponible suivant la détermination (201) effectuée pendant la première période de temps, où le préambule est transmis (202) jusqu'à une seconde période de temps avant un prochain instant temporel fixe, et où la seconde période de temps est plus petite qu'une période de temps requise par un autre dispositif de communication pour commencer une transmission sur le canal radio, et
des moyens adaptés pour transmettre (203) les informations de données sur le canal radio disponible au second dispositif de communication (121 ; 122 ; 123 ; 110) au prochain instant temporel fixe suivant la transmission du préambule.

8. Premier dispositif de communication (110 ; 121 ; 122 ; 123) selon la revendication 7, dans lequel le préambule à travers la largeur de bande complète du canal radio disponible.

9. Premier dispositif de communication (110 ; 121 ; 122 ; 123) selon la revendication 7, dans lequel le préambule est transmis sur une largeur de bande déterminée du canal radio disponible pour lequel le second dispositif de communication (121 ; 122 ; 123 ; 110) a été ordonnancé pour transmettre les informations de données.

10. Premier dispositif de communication (110 ; 121 ; 122 ; 123) selon l'une quelconque des revendications 7 à 9, dans lequel le préambule comprend des informations associées à la transmission des informations de données.

11. Premier dispositif de communication (110 ; 121 ; 122 ; 123) selon l'une quelconque des revendications 7 à 10, dans lequel les informations associées à la transmission des informations de données indiquent la largeur de bande du canal radio disponible que le premier dispositif de communication (110 ; 121 ; 122 ; 123) utilise lors de la transmission des informations de données.

12. Premier dispositif de communication (110 ; 121 ; 122 ; 123) selon l'une quelconque des revendications 7 à 11, dans lequel la première période de temps déterminée par le premier dispositif de communication (110 ; 121 ; 122 ; 123) est une période de temps générée aléatoirement.

13. Premier dispositif de communication (110 ; 121 ; 122 ; 123) selon l'une quelconque des revendications 7 à 12, en outre configuré pour déterminer (201) que le canal radio est disponible en déterminant que le niveau d'énergie de transmissions sur le canal radio est inférieur à une valeur de seuil pendant la durée de la première période de temps.

14. Premier dispositif de communication (110 ; 121 ; 122 ; 123) selon l'une quelconque des revendications 7 à 13, dans lequel un instant temporel fixe est le début d'une sous-trame.

15. Premier dispositif de communication (110 ; 121 ; 122 ; 123) selon l'une quelconque des revendications 7 à 14, dans lequel le premier dispositif de communication est soit un noeud de réseau (110) dans le réseau de communications radio (100) soit un dispositif sans fil (121 ; 122 ; 123).
